# EUROPÄISCHE PATENTSCHRIFT

(11) **EP 0 800 888 B1**
(45) Veröffentlichungstag und Bekanntmachung des Hinweises auf die Patenterteilung: **12.07.2000**
(21) Anmeldenummer: 96104668.7
(22) Anmeldetag: 25.03.1996
(51) Int. Cl.: B23K 26/00

(54) **Verfahren zum Verschweissen verzinkter Bleche mittels eines Festkörperlasers**
Process for welding tinned metal sheets, using a solid state laser
Procédé de soudage de tôles zinguées, au moyen d'un laser à solide

(43) Veröffentlichungstag der Anmeldung: 15.10.1997
(73) Patentinhaber: INPRO Innovationsgesellschaft für fortgeschrittene Produktionssysteme in der Fahrzeugindustrie mbH, 10587 Berlin (DE)
(72) Erfinder: Beck, Thomas, 16341 Zepernick (DE); Bostanjoglo, Geord, Dr., 10711 Berlin (DE); Dommaschk, Ralf, c/o INPRO GmbH, 10587 Berlin (DE)
(74) Vertreter: Hoffmann, Klaus-Dieter, Dipl.-Ing.

(56) Entgegenhaltungen:
- EP-A- 0 564 995
- US-A- 5 049 718

## Beschreibung

Die Erfindung betrifft ein Verfahren zum Verschweißen verzinkter Bleche, die ohne Fügespalt zueinander angeordnet werden, mittels eines Festkörperlasers (vgl. EP-A-564 995).

Beim Schweißen verzinkter Bleche stellt sich das prizipielle technische Problem, daß bei einer Anordnung der zu verschweißenden Bleche ohne Fügespalt zwischen ihnen Zinkdampf, der wegen der deutlich niedrigeren Verdampfungstemperatur des Zinks als der Schmelztemperatur des Stahls beim Schweißen mittels Laser entsteht,durch die Schmelze entweicht und zu sehr porigen Nahtoberflächen führt.

Um dieses Problem in den Griff zu bekommen,werden durch geeignete konstruktive Maßnahmen häufig Fügespalte in die Blechanordnungen eingebracht. Für die vielfach verwendete Anordnung der Kehlnaht am Überlappstoß sind solche Maßnahme äußerst aufwendig, vielmehr ist hier eine Übernahme der Fügeanordnung ohne Spalt zwischen den Blechen als vorteilhaft anzusehen.Erfolgt bei einer solchen Anordnung die Verschweißung der Bleche durch einen Dauerstrichfestkörperlaser, so können die dabei auftretenden Poren und Nahtfehlstellen durch Zusatz von Schutz- und Prozeßgas bei geeigneneter Zinkschichtkombination vermieden werden. Hierbei wird jedoch der Toleranzbereich, der für die Anwendung in der Praxis bezüglich der Fokuspositionierung auf dem Werkstück, des Einflusses der Bauteilgeometrie auf den Gasstromm usw. verbleibt, so eingeschränkt, daß eine Anwendung an einem realen Bauteil nahezu nicht in Frage kommt.

Der Erfindung liegt daher die Aufgabe zugrunde, ein Verfahren zum Verschweißen verzinkter Bleche, die ohne Fügespalt zueinander angeordnet werden, mittels eines Festkörperlasers derart zur Verfügung zu stellen, daß ohne den Zusatz von Schutz- und Prozeßgasen porenfreie Nahtoberflächen erzielbar sind und eine Erweiterung der Prozeßmöglichkeiten erreichbar ist, insbesondere bei der bevorzugten Fügeanordnung Kehlnaht am Überlappstoß.

Diese Aufgabe wird erfindungsgemäß dadurch gelöst, daß das Verschweißen der verzinkten Bleche mittels eines gütegeschalteten Nd:YAG-Dauerstrichfestkörperlasers ohne zusätzliche Maßnahmen durchgeführt wird.

Vorzugsweise erfolgt erfindungsgemäß die Verschweißung der verzinkten Bleche mittels des gütegeschalteten Dauerstrichfestkörperlasers an der Kehlnaht am Überlappstoß.

Vorteilhafterweise wird ein 1,5 kW starker Dauerstrichfestkörperlaser verwendet, dessen Güteschaltung durch Einbringung von akusto-optischen Modulatoren (AOM) zwischen die einzelnen Kavitäten realisiert wird. Durch die Beugung der Strahlung im Resonator am AOM wird der Resonator derart verstimmt, daß der Laserprozeß unterbrochen wird. Da die Nd:YAG Kristalle weiterhin gepumpt werden und die angeregten Nd-Atome ihre Energie nicht abgeben können, kommt es beim Öffnen der AOM zu einem schlagartigen Abbau und damit zu einem leistungsstarken Laserpuls.Je nach Einstellung der Frequenz, mit der der Resonator geöffnet wird, kann die Pulsleistung variiert werden. Die Frequenzen liegen im Bereich bis 80 kHz, die erzielbaren Pulsleistungen im Megabereich.

Vorzugsweise werden für den Einsatz des Dauerstrichfestkörperlasers zum Verschweißen der verzinkten Bleche Frequenzen in Bereich von 40 bis 80 kHz verwendet, da die Pulsleistungen gering genug sind (40 bis 60 kW Pulsleistung).

Die Beschichtung der Bleche mit Zink dient u.a. der Verminderung von Korrosion der Bauteilen eines Kraftfahrzeuges. Die Korrosionsbeständigkeit wird zusätzlich durch Lackschichten und Füllmaterialien verbessert.

Vorzugsweise werden galvanealed verzinkte oder feuerverzinkte galvanealed Bleche verschweißt.

Es können auch elektrolytisch verzinkte oder feuerverzinkte Bleche verschweißt werden, jedoch nur in eingeschränktem Maße.

Das erfindungsgemäße Verfahren wird nun anhand der Zeichnungen erläutert. In diesen sind:
- Fig. 1: eine schematische Darstellung der Bestandteile einer Bearbeitungsanlage zur Durchführung des Verfahrens und
- Fig. 2: eine Ansicht der bevorzugten Fügeanordnung Kehlnaht am Überlappstoß.

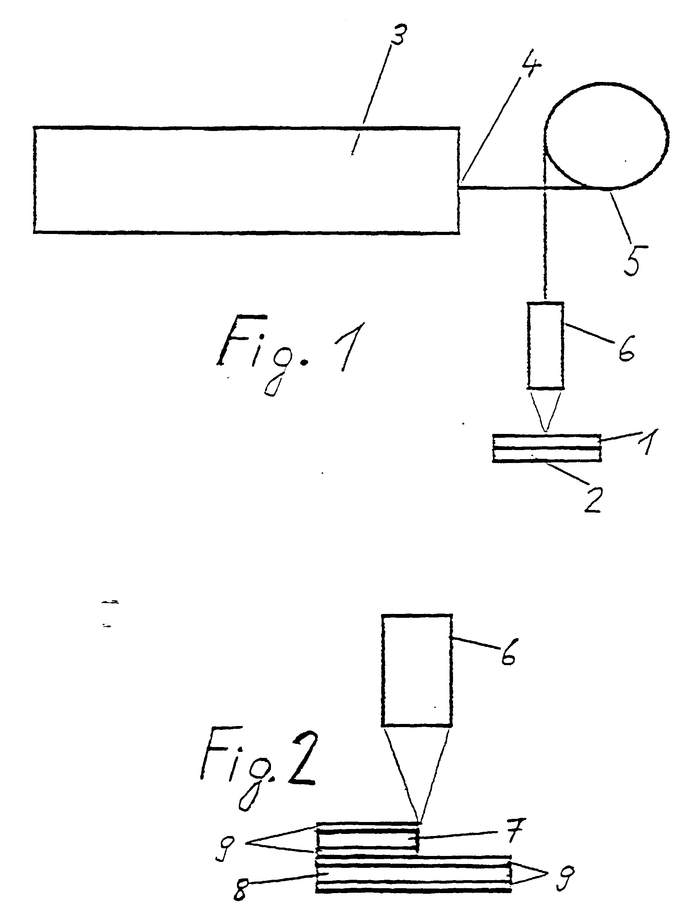

Wie Fig. 1 verdeutlicht, wird zum Verschweißen verzinkter Bleche 1 und 2, die ohne Fügespalt zueiander angeordnet sind, als Laser-Strahlquelle 3 ein Dauerstrichfestkörperlaser (Nd:YAG) mit Güteschaltung verwendet, an dessen Ausgang 4 ein Lichtleitkabel 5 angeschlossen ist, das die Strahlung zu einer Arbeitsoptik 6 leitet, durch die die Fokussierung des Arbeitstrahls auf die zu verschweißenden Bleche 1 und 2 erfolgt. Die Güteschaltung des Dauerstrichfestkörperlasers ist durch zwischen die einzelnen Kavitäten eingebrachte akusto-optische Modulatoren (AOM) realisiert. Durch die Beugung der Strahlung im Resonator am AOM wird der Resonator so verstimmt, daß der Laserprozeß unterbrochen wird. Beim Öffnen der AOM kommt es dann zu einem leistungsstarken Laserimpuls. Wird eine geeignete Zinkschichtkombination gewählt, so gewährleistet der Einsatz des gütegeschalteten Dauerstrichfestkörperlasers ein Verschweißen der verzinkten Bleche mit einer exakt porenfreien Nahtoberfläche ohne zusätzlichen Maßnahmen.

Besonders bei der bevorzugten, häufig verwendeten Anordnung der Kehlnaht am Überlappstoß von Oberblech 7 und Unterblech 8,die jeweils mit einer Zn-Auflage 9 versehen sind (Fig. 2), erweist sich der Einsatz des Verfahrens als vorteilhaft.

## Patentansprüche

1. Verfahren zum Verschweißen verzinkter Bleche (1,2), die ohne Fügespalt zueinander angeordnet werden, mittels eines Festkörperlasers (3),
dadurch gekennzeichnet,
daß das Verschweißen der verzinkten Bleche (1,2) mittels eines gütegeschalteten Nd:YAG-Dauerstrichfestkörperlasers (3) ohne zusätzliche Maßnahmen durchgeführt wird.

2. Verfahren nach Anspruch 1, dadurch gekennzeichnet, daß die Verschweißung der verzinkten Bleche mittels des gütegeschalteten Dauerstrichfestkörperlasers (3) an der Kehlnaht am Überlappstoß erfolgt.

3. Verfahren nach Anspruch 1 und 2, dadurch gekennzeichnet, daß ein 1,5 kW starker Dauerstrichfestkörperlaser (3) verwendet wird, dessen Güteschaltung durch Einbringen von akusto-optischen Modulatoren (AOM) zwischen die einzelnen Kavitäten realisiert wird, wobei durch die Beugung der Strahlung im Resonator am AOM der Resonator derart verstimmt wird, daß der Laserprozeß unterbrochen und beim Öffnen der AOM ein leistungsstarker Laserimpuls erzeugt wird.

4. Verfahren nach Anspruch 3, dadurch gekennzeichnet, daß die Pulsleistung durch die Einstellung der Frequenz,mit der der Resonator geöffnet wird, variiert wird.

5. Verfahren nach Anspruch 3 und 4, dadurch gekennzeichnet, daß Frequenzen im Bereich von 40 bis 80 kHz verwendet werden.

6. Verfahren nach Anspruch 1 bis 5, dadurch gekennzeichnet, daß galvanealed verzinkte Bleche verschweißt werden.

7. Verfahren nach Anspruch 1 bis 5, dadurch gekennzeichnet, daß elektrolytisch verzinkte Bleche verschweißt werden.

8. Verfahren nach Anspruch 1 bis 5, dadurch gekennzeichnet, daß feuerverzinkte Bleche verschweißt werden.

9. Verfahren nach Anspruch 1 bis 5, dadurch gekennzeichnet, daß feuerverzinkte galvanealed Bleche verschweißt werden.

## Claims

1. Process for welding tinned metal sheets (1,2) which are arranged to each other without joining gap, using a solid state laser (3), characterized thereby that the welding of the tinned metal sheets (1,2) is done by means of a Q-switched continous-wave solid state laser (3) (Nd: YAG) without additional measures.

2. Process in accordance with claim 1, characterized thereby that the welding of the tinned metal sheets is done by means of the continous-wave solid state laser (3) at the fillet weld in a lap joint.

3. Process in accordance with claims 1 and 2, characterized thereby that a continous-wave solid state laser (3) with a capacity of 1.5 kW is used, the Q-switching of which is realized by the application of acousto-optical modulators (AOM) between the individual cavities, whereby the resonator at the AOM is, due to the diffraction of the radiation in the resonator, non-resonating in such a manner that the laser process is interrupted and a high-capacity laser impulse is created upon the opening of the AOM.

4. Process in accordance with claim 3, characterized thereby that the pulse capacity is varied by means of the setting of the frequency with which the resonator is opened.

5. Process in accordance with claims 3 and 4, characterized thereby that frequencies in the range of 40 to 80 kHz are used.

6. Process in accordance with claims 1 to 5, characterized thereby that galvanealed tinned metal sheets are welded.

7. Process in accordance with claims 1 to 5, characterized thereby that electrolytically galvanized tinned metal sheets are welded.

8. Process in accordance with claims 1 to 5, characterized thereby that hot-dip galvanized tinned metal sheets are welded.

9. Process in accordance with claims 1 to 5, characterized thereby that hot-dip galvanized galvanealed tinned metal sheets are welded.

## Revendications

1. Procédé de soudage de tôles zinguées (1, 2) au moyen d'un laser à solide (3) disposées ensemble sans fente de jointure, caractérisé par le fait que le soudage des tôles zinguées (1, 2) au moyen d'un laser continu à solide à fonction de Q-switch (3) ( Nd: YAG) est réalisé sans mesures additionnelles.

2. Procédé suivant revendication 1, caractérisé par le fait que le soudage des tôles zinguées au moyen du laser continu à solide à fonction de Q-switch (3) est réalisé sur la soudure d'angle de l'assemblage de recouvrement.

3. Procédé suivant revendications 1 et 2, caractérisé par le fait qu'on utilise un laser continu à solide (3) de 1,5 kW dont la fonction de Q-switch est réalisée par l'application de modulateurs acoustiques-optiques (AOM) entre les différentes cavités, le résonateur étant désaccordé par la diffraction de la radiation dans le résonateur à l'AOM de sorte que le processus laser est interrompu et une impulsion laser performante est produite en ouvrant l'AOM.

4. Procédé suivant revendication 3, caractérisé par le fait que la puisssance d'impulsion est variée en ajustant la fréquence avec laquelle le résonateur est ouvert.

5. Procédé suivant revendications 3 et 4, caractérisé par le fait que sont utilisées des fréquences dans le champ de 40 à 80 kHz.

6. Procédé suivant revendications 1 à 5, caractérisé par le fait que des tôles zinguées galvanisées sont soudées.

7. Procédé suivant revendications 1 à 5, caractérisé par le fait que des tôles zinguées électrolytiquement sont soudées.

8. Procédé suivant revendications 1 à 5, caractérisé par le fait que des tôles zingées à chaud sont soudées.

9. Procédé suivant revendications 1 à 5, caractérisé par le fait que des tôles galvanisées zinguées à chaud sont soudées.
